# EUROPÄISCHE PATENTSCHRIFT

(11) **EP 4 208 408 B1**
(45) Veröffentlichungstag und Bekanntmachung des Hinweises auf die Patenterteilung: **02.10.2024**
(21) Anmeldenummer: 21737564.1
(22) Anmeldetag: 23.06.2021
(51) Int. Cl.: C01B 3/34, B01D 53/04, C01B 3/36, F25J 3/02, C01B 3/56

(54) **VERFAHREN UND VORRICHTUNG ZUR ERZEUGUNG VON STICKSTOFFARMEM SYNTHESEGAS AUS STICKSTOFFHALTIGEM ERDGAS**
METHOD AND DEVICE FOR PRODUCING LOW NITROGEN SYNTHESIS GAS FROM NITROGEN-CONTAINING NATURAL GAS
PROCÉDÉ ET DISPOSITIF DE PRODUCTION D'UN GAZ DE SYNTHÈSE À FAIBLE TENEUR EN NITROGÈNE À PARTIR DE GAZ NATUREL CONTENANT DE L'AZOTE

(30) Priorität: 03.09.2020 EP 20020397
(43) Veröffentlichungstag der Anmeldung: 12.07.2023
(73) Patentinhaber: Linde GmbH, 82049 Pullach (DE)
(72) Erfinder: SCHWARZHUBER, Josef, 85283 Wolnzach (DE); HEINZEL, Albrecht, 81479 München (DE); HASELSTEINER, Thomas, 83623 Dietramszell (DE); ETTNER, Florian, 81371 München (DE)
(74) Vertreter: Fischer, Werner
(86) Internationale Anmeldenummer: PCT/EP2021/025228
(87) Internationale Veröffentlichungsnummer: WO 2022/048788

(56) Entgegenhaltungen:
- WO-A1-2011/059451
- US-A- 5 647 227
- US-A1- 2008 312 347
- US-A1- 2014 186 255

## Beschreibung

Die Erfindung betrifft ein Verfahren zur Erzeugung eines stickstoffarmen Synthesegases aus einem stickstoff- und kohlendioxidhaltigen Erdgas, von dem dabei Wasser und Kohlendioxid in einer ersten Temperaturwechseladsorptionsanlage und anschließend Stickstoff in einem kryogenen Gaszerleger abgetrennt werden, so dass ein stickstoffarmes, wasser- und kohlendioxidfreies Erdgas entsteht, das nachfolgend einer thermochemischen Konvertierung zugeführt wird, um ein Wasserstoff, Kohlenmonoxid, Wasser und Kohlendioxid umfassendes Syntheserohgas zu gewinnen, aus dem zumindest durch die Abtrennung von Wasser und Kohlendioxid in einer zweiten Temperaturwechseladsorptionsanlage das stickstoffarme Synthesegas erhalten wird.

Weiterhin betrifft die Erfindung eine Vorrichtung zur Durchführung des erfindungsgemäßen Verfahrens.

Im hier verwendeten Sprachgebrauch gilt ein Gasgemisch als frei von einer Komponente, wenn der Anteil dieser Komponente an dem Gasgemisch 0,1 ppmv nicht übersteigt. Hingegen wird ein Gasgemisch als eine Komponente enthaltend bezeichnet, wenn der Anteil dieser Komponente größer als 0,5 mol-% ist. Als arm an einer Komponente gilt ein Gasgemisch, wenn der Anteil dieser Komponente zwischen 0,5mol-% und 1 ppmv liegt.

Als Synthesegase werden Gasgemische bezeichnet, die zumindest Wasserstoff und Kohlenmonoxid enthalten und zur Synthese unterschiedliche Produkte einsetzbar sind. Sie werden vorwiegend aus Erdgas erzeugt, das dabei durch Autothermalreformierung (ATR), Partialoxidation (POX), Dampfreformierung (SMR) oder durch eine Kombination von zwei oder mehr dieser, aus dem Stand der Technik seit vielen Jahren bekannten Verfahren thermochemisch konvertiert wird. Das gewöhnlich einen Stickstoffgehalt zwischen 1 bis 10mol-% aufweisende, kohlendioxidhaltige Erdgas wird etwa durch Quecksilberabtrennung, Entschwefelung, Anwärmung und Verdichtung zu einem Erdgas-Einsatz aufbereitet, der anschließend unter Zuführung von Wasser und/oder Kohlendioxid zu einem Syntheserohgas umgesetzt wird, das neben Kohlenmonoxid und Wasserstoff auch größere Mengen an Kohlendioxid und Wasser sowie andere im Synthesegas unerwünschte Stoffe umfasst. Um ein stickstoffarmes Synthesegas zu erhalten, kann Stickstoff entweder stromabwärts der thermochemischen Konversion aus dem erzeugten Syntheserohgas oder bereits stromaufwärts aus dem eingesetzten Erdgas entfernt werden.

Ist die Stickstoffabtrennung der thermochemischen Konversion nachgeschaltet, wird das entschwefelte und von Quecksilber befreite Erdgas mit seiner gesamten Stickstofffracht zu einem stickstoffhaltigen Syntheserohgas umgesetzt, aus dem zunächst der größte Teil des Kohlendioxids z.B. in einer Aminwäschen abgetrennt wird, ehe Wasser sowie der verbliebene Kohlendioxidrest in einer Temperaturwechseladsorptionsanlage (im Folgenden kurz als TWA bezeichnet) entfernt werden. Das so erhaltene, weitgehend aus Wasserstoff, Kohlenmonoxid und Stickstoff bestehende Gasgemisch wird dann mit Hilfe eines kryogenen Gaszerlegers in Rohwasserstoff, Kohlenmonoxid und eine brennbare Stoffe enthaltende Stickstofffraktion aufgetrennt. Nach seinem Einsatz als Regeneriergas in der TWA, wird der Rohwasserstoff in einer Druckwechseladsorptionsanlage (kurz DWA) zu Reinwasserstoff aufgereinigt, von dem zumindest ein Teil mit Kohlenmonoxid aus dem kryogenen Gaszerleger zu dem stickstoffarmen Synthesegas gemischt wird.

Im kryogenen Gaszerleger werden Kohlenmonoxid und Stickstoff in einer Kolonne rektifikatorisch getrennt, was wegen der sehr ähnlichen Siedetemperaturen der beiden Stoffe nur mit einem hohen Rücklaufverhältnis und/oder vielen Trennstufen in der Kolonne erreichbar ist. Ein weiterer Verdichter ist erforderlich, um das wasserstoffhaltige, bei der Aufreinigung des Rohwasserstoffs in der DWA anfallende Restgas zurückzuführen und zur Erzielung einer ausreichend hohen Ausbeute in der thermochemischen Konvertierung einzusetzen oder als Brennstoff zu unterfeuern. Der hieraus resultierende hohe apparative und energetische Aufwand beeinträchtigt die Wirtschaftlichkeit dieser Verfahrensvariante ganz erheblich.

Da sich die Siedetemperaturen von Stickstoff und Methan wesentlich stärker voneinander unterscheiden als diejenigen von Stickstoff und Kohlenmonoxid, ist es vergleichsweise einfach, Stickstoff aus stickstoffhaltigem Erdgas in einem kryogenen Gaszerleger rektifikatorisch abzutrennen. Insbesondere kann die eingesetzte Trennkolonne energetisch günstig ohne Rücklauf betrieben werden. Eine alternative Verfahrensvariante sieht daher vor, den Stickstoff nicht erst aus dem Syntheserohgas, sondern bereits aus dem eingesetzten Erdgas in einem kryogenen Verfahren abzutrennen und aus dem so erhaltenen stickstoffarmen Erdgas-Einsatz durch thermochemische Konvertierung ein ebenfalls stickstoffarmes Syntheserohgas zu erzeugen. Bei der Aufbereitung des Syntheserohgases zum stickstoffarmen Synthesegas sind zwar auch in dieser Verfahrensvariante eine Einrichtung zur Kohlendioxidentfernung und eine TWA zur Wasser- und Kohlendioxidabtrennung erforderlich, jedoch kann auf einen aufwendigen kryogenen Synthesegaszerleger, eine DWA zur Reinigung von Rohwasserstoff sowie einen Rückführ-Verdichter für das wasserstoffhaltige DWA-Restgas verzichtet werden. Nachteilig ist aber, dass stromaufwärts des kryogenen Erdgaszerlegers zumindest eine zusätzliche TWA sowie u.U. eine Einrichtung zur Kohlendioxidentfernung angeordnet werden müssen, die verhindern, dass Wasser und Kohlendioxid zusammen mit dem Erdgas in den kryogenen Erdgaszerleger gelangen, wo sie ausfrieren und zu Blockaden führen würden. Insbesondere dann, wenn Kohlendioxid mittels eines auf einem wasserhaltigen Waschmittel basierenden Verfahren wie der Aminwäsche entfernt wird, kommt es zur Wasseraufsättigung, so dass eine TWA zur Wasserabtrennung auch dann benötigt wird, wenn das eingesetzte Erdgas wasserfrei ist.

Temperaturwechseladsorptionsanlagen für den Einsatz zur Entfernung von Wasser und Kohlendioxid aus Gasströmen sind dem Fachmann ebenfalls seit vielen Jahren bekannt. Der zu behandelnde Gasstrom wird mit einer ersten Temperatur der TWA zugeführt, wo er durch einen von mehreren Adsorbern strömt, die jeweils mit einem Adsorbermaterial gefüllt sind, das im Gasstrom enthaltenes Wasser und Kohlendioxid adsorbiert und festhält, während es andere Stoffe wie Methan, Wasserstoff oder Kohlenmonoxid weitgehend ungehindert passieren lässt. Der Gasstrom verlässt den Adsorber daher mit Wasser- und Kohlendioxidgehalten, die deutlich unter 1 ppmv liegen.

Da die Aufnahmefähigkeit des Adsorbermaterials für Wasser und Kohlendioxid begrenzt ist, muss der Gasstrom zum Absorber nach einer gewissen Zeit unterbrochen werden, ehe der Wasser- oder Kohlendioxidgehalt des austretenden Gasstroms einen Grenzwert überschreitet. Während der zu behandelnde Gasstrom zu einem anderen Adsorber der TWA mit noch aufnahmefähigem Adsorbermaterial umgelenkt wird, wird der mit Wasser und Kohlendioxid beladene Adsorber regeneriert. Hierzu wird er mit einem Regeneriergas gespült, das eine zweite Temperatur aufweist, die größer ist als die erste Temperatur, mit der der zu behandelnde Gasstrom dem Adsorber zugeführt wird. Das Adsorptionsvermögen des Adsorbermaterials nimmt mit steigender Temperatur ab, so dass die abgetrennten Stoffe desorbiert und mit dem Regeneriergas aus dem Adsorber entfernt werden. Wenn nicht wie oben beschrieben Rohwasserstoff zur Verfügung steht, wird gewöhnlich Stickstoff als Regeneriergas eingesetzt, der vom Adsorbermaterial nicht oder doch nur sehr schlecht adsorbiert wird. Weil neben Wasser und Kohlendioxid auch umweltschädlichen Stoffe wie Methan und Kohlenmonoxid aus Erd- und Syntheserohgas in geringen Mengen abgetrennt werden und bei der Adsorberregenerierung in das Regeneriergas übergehen, kann der beladene Stickstoff nicht unbehandelt in die Atmosphäre freigesetzt werden. Um bestehende Emissionsgrenzwerte einzuhalten, wird er daher katalytisch nachverbrannt oder mittels Stützfeuerung in einer Fackel oder einem Prozessofen entsorgt.

Da sowohl die erste als auch die zweite TWA regeneriert werden muss, ist der Bedarf an Regeneriergas bei einer gattungsgemäßen Synthesegaserzeugung besonders groß. Nach dem Stand der Technik wird als Regeneriergas Niederdruckstickstoff importiert, dessen Bereitstellung und Entsorgung einen bedeutenden Kostenfaktor darstellt, der sich deutlich negativ auf die Wirtschaftlichkeit der Synthesegaserzeugung auswirkt.

US 2008/312347 A1 offenbart ein Verfahren und eine Anlage zur Herstellung von Synthesegas (20) umfassend die Entfernung von CO₂ vom Erdgas mittels Absorption (12), die Trocknung des Erdgases durch Kondensation (14), die kryogene Separation von u.A. N₂ (16) und die Reformierung (20) in einem autothermen Reformer oder in einer Partialoxidationsanlage. Das erhaltene Synthesegas (40) wird in einer Fischer-Tropsch-Anlage (22) umgesetzt. Das Fischer-Tropsch-Abgas (44) wird von CO2 (28) und Wasser30 befreit.

Aufgabe der vorliegenden Erfindung ist es, ein Verfahren der gattungsgemäßen Art sowie eine Vorrichtung zu dessen Durchführung anzugeben, die es ermöglichen, die beschriebenen Nachteile des Standes der Technik zu überwinden.

Diese Aufgabe wird verfahrensseitig erfindungsgemäß dadurch gelöst, dass wenigstens ein Teil des stickstoffarmen, wasser- und kohlendioxidfreien Erdgases vor seiner thermochemischen Konvertierung bei der Regenerierung der ersten und/oder der zweiten Temperaturwechseladsorptionsanlage als Regeneriergas eingesetzt wird. Das stickstoffarme, wasser- und kohlendioxidfreie Erdgas eignet sich als Regeneriergas, da es weitgehend aus Methan besteht, das von dem in einer zur Wasser- und/oder Kohlendioxidabtrennung eingesetzten TWA insbesondere bei den während der Regenerierung in den Adsorbern herrschenden Temperauren nicht oder nur in sehr geringem Maß adsorbiert wird.

Es ist bekannt, dass die zur Wasser- und Kohlendioxidabtrennung einsetzbaren Adsorbermaterialien bei erhöhten Temperaturen insbesondere ungesättigte Kohlenwasserstoffe katalytisch zersetzten können, was zu unerwünschten Kohlenstoffablagerungen führt. Obwohl das stickstoffarme, wasser- und kohlendioxidfreie Erdgas praktisch keine ungesättigten Kohlenwasserstoffe enthält und die Gefahr einer Zersetzung gesättigter Kohlenwasserstoffe erheblich geringer ist, wird vorgeschlagen, die Temperaturen für die erfindungsgemäßen TWA-Regenerierungen auf Werte zwischen 170 und 230°C, bevorzugt zwischen 170 und 200°C zu beschränken.

Wird aus der Gesamtmenge des für die Synthesegaserzeugung vorgesehenen stickstoff- und kohlendioxidhaltigen Erdgases stickstoffarmes, wasser- und kohlendioxidfreies Erdgas erzeugt, so reicht dessen Menge in der Regel aus, um den Regeneriergasbedarf für die erste und die zweite TWA zu decken. Die Zuführung eines weiteren Regeneriergases, wie beispielsweise Stickstoff, ist dann nicht erforderlich. Zuviel produziertes, nicht für die TWA-Regenerierung benötigtes stickstoffarmes, wasser- und kohlendioxidfreies Erdgas kann direkt der thermochemischen Konvertierung zugeführt werden. Möglich ist es aber auch, aus dem stickstoffhaltigen Erdgas nur so viel stickstoffarmes, wasser- und kohlendioxidfreies Erdgas zu erzeugen, wie tatsächlich als Regeneriergas benötigt wird. Vorzugsweise wird der nicht für eine Wasser- und oder Kohlendioxidabtrennung vorgesehene Teil des stickstoff- und kohlendioxidhaltigen Erdgases nach einer evtl. erforderlichen Abtrennung von Quecksilber und/oder Schwefelkomponenten direkt der thermochemischen Konvertierung zugeführt.

Bei der Adsorberregenerierung wird das in den TWA als Regeneriergas eingesetzte stickstoffarme, wasser- und kohlendioxidfreie Erdgas mit desorbierten Stoffen beladen, bei denen es sich vorwiegend um Wasser und Kohlendioxid handelt. Zweckmäßigerweise wird das beladene Regeneriergas ohne Änderung seiner chemischen Zusammensetzung zusammen mit den bei der Adsorberregenerierung desorbierten Stoffen der thermochemischen Konvertierung zugeführt. Hierfür wird entweder die Adsorberregenerierung so langsam durchgeführt, dass nur geringe Wasser- und Kohlendioxidmengen über den Regeneriergasweg in den thermochemischen Konverter gelangen, wo sie lediglich einen vernachlässigbaren Effekt auf die Synthesegaszusammensetzung haben. Da Wasser und Kohlendioxid bei der thermochemischen Konvertierung als Reaktanden bzw. Temperaturmoderatoren benötig und der thermochemische Konvertierung ohnehin als Einsatzstoffe zugeführt werden, sieht eine alternative Verfahrensvariante eine Regelung vor, die dafür sorgt, dass unabhängig von der Beladung des Regeneriergases stets die verfahrensbedingt erforderlichen Wasser- und Kohlendioxidmengen in den Konverter gelangen.

Falls stickstoffarmes, wasser- und kohlendioxidfreies Erdgas sowohl zur Regenerierung der ersten als auch der zweiten Temperaturwechseladsorptionsanlage eingesetzt werden soll, wird der als Regeneriergas bestimmte Teil des stickstoffarmen, wasser- und kohlendioxidfreien Erdgases vorzugsweise in einen ersten und einen zweiten Teilstrom aufgespalten, von denen der erste ausschließlich der ersten und der zweite ausschließlich der zweiten TWA als Regeneriergas zugeführt wird. Um die Strömungsverluste zu minimieren, wird sinnvollerweise jeder TWA nur die von ihr benötigte Mindestmenge an Regeneriergas zugeführt.

Möglich ist es aber auch, zur Regenerierung jeder der beiden TWA die Gesamtmenge des als Regeneriergas bestimmten stickstoffarmen, wasser- und kohlendioxidfreien Erdgases zuzuführen, das dabei in einer der beiden TWA mit desorbierten Stoffen vorbeladen und anschließend in der anderen TWA zur Adsorberregenerierung verwendet wird.

Aus wirtschaftlichen und technischen Gründen ist die Kohlendioxidabtrennung mit Hilfe einer TWA nur dann sinnvoll, wenn der Kohlendioxidgehalt des zu behandelnden Gasgemisches einen Maximalwert, der typischerweise bei 1mol-% liegt, nicht übersteigt. Falls das stickstoff- und kohlendioxidhaltige Erdgas mehr Kohlendioxid enthält, als sinnvoll in einer TWA abgetrennt werden kann, sieht eine Ausgestaltung des erfindungsgemäßen Verfahrens vor, dass der Kohlendioxidgehalt des stickstoff- und kohlendioxidhaltigen Erdgases stromaufwärts der TWA bis unterhalb des besagten Maximalwerts reduziert wird. Vorzugsweise wird das stickstoff- und kohlendioxidhaltige Erdgas hierzu einer Sauergaswäsche wie etwa einer Aminwäsche unterzogen. Das hier abgetrennte Kohlendioxid kann entweder in die Atmosphäre freigesetzt oder einer stofflichen Verwertung zugeführt werden. Bevorzugt wird das abgetrennte Kohlendioxid stromabwärts in der thermochemischen Konvertierung eingesetzt.

Das erfindungsgemäße Verfahren ist weitgehend unabhängig von der Art der thermochemischen Konvertierung. So kann das stickstoffarme, wasser- und kohlendioxidfreie Erdgas beispielsweise durch Autothermalreformierung, Partialoxidation, Dampfreformierung oder in einer Kombination von wenigstens zwei dieser Verfahren zu Syntheserohgas umgesetzt werden.

Weiterhin betrifft die Erfindung eine Vorrichtung zur Erzeugung eines stickstoffarmen Synthesegases aus einem stickstoff- und kohlendioxidhaltigen Erdgas, mit einer ersten Temperaturwechseladsorptionsanlage zur Abtrennung von Wasser und Kohlendioxid aus dem stickstoff- und kohlendioxidhaltigen Erdgas und zur Gewinnung eines stickstoffhaltigen, wasser- und kohlendioxidfreien Erdgases, einem kryogenen Gaszerleger, mit dem aus dem stickstoffhaltigen, wasser- und kohlendioxidfreien Erdgas durch die Abtrennung von Stickstoff ein stickstoffarmes, wasser- und kohlendioxidfreies Erdgas erhältlich ist, einem thermochemischen Konverter zur Umsetzung des stickstoffarmen, wasser- und kohlendioxidfreien Erdgases zu einem Wasserstoff, Kohlenmonoxid, Wasser und Kohlendioxid umfassenden Syntheserohgas, sowie einer zweiten Temperaturwechseladsorptionsanlage, mit der aus dem Syntheserohgas Wasser und Kohlendioxid abgetrennt werden können, um das stickstoffarme Synthesegas zu erhalten.

Die gestellte Aufgabe wird vorrichtungsseitig erfindungsgemäß dadurch gelöst, dass der kryogene Gaszerleger über die erste und die zweite
Temperaturwechseladsorptionsanlage derart mit dem thermochemischen Konverter verbunden ist, dass wenigstens ein Teil des stickstoffarmen, wasser- und kohlendioxidfreien Erdgases vor seiner Umsetzung im thermochemischen Konverter bei der Regenerierung der ersten und/oder der zweiten
Temperaturwechseladsorptionsanlage als Regeneriergas einsetzbar ist.

Vorzugsweise ist die Verbindung der ersten und der zweiten TWA mit dem thermochemischen Konverter so ausgeführt, dass der als Regeneriergas eingesetzte Teil des stickstoffarmen, wasser- und kohlendioxidfreien Erdgases zusammen mit den bei der Adsorberregenerierung desorbierten Stoffen dem thermochemischen Konverter zugeführt werden kann. Insbesondere umfasst die Verbindung keine Einrichtung zur Abtrennung von Wasser und/oder Kohlendioxid aus dem eingesetzten Regeneriergas.

In einer bevorzugten Variante der erfindungsgemäßen Vorrichtung ist der kryogene Gaszerleger so mit der ersten und der zweiten TWA verbunden, dass ein erster Teil des als Regeneriergas bestimmten stickstoffarmen, wasser- und kohlendioxidfreien Erdgases ausschließlich in der ersten und ein zweiter Teil ausschließlich in der zweiten TWA als Regeneriergas verwendbar ist. Sinnvollerweise umfasst die Verbindung einen Verteiler, über den der Massenstrom des stickstoffarmen, wasser- und kohlendioxidfreien Erdgases entsprechend des aktuellen Regeneriergasbedarfs der beiden TWA einstellbar ist.

Möglich ist auch eine Verbindung, bei der der kryogene Gaszerleger und die beiden TWA in Serie angeordnet sind, so dass die Gesamtmenge des als Regeneriergas bestimmten stickstoffarmen, wasser- und kohlendioxidfreien Erdgases zunächst der einen und anschließend der anderen TWA zugeführt werden kann. Zweckmäßigerweise ist in diesem Fall lediglich die in Strömungsrichtung letzte TWA direkt mit dem thermochemischen Konverter verbunden, so dass das in den beiden TWA als Regeneriergas eingesetzte und bei der Adsorberregenerierung mit desorbierten Stoffen beladene stickstoffarme, wasser- und kohlendioxidfreie Erdgas in den thermochemischen Konverter einleitbar ist.

Falls das stickstoff- und kohlendioxidhaltige Erdgas mehr Kohlendioxid enthält, als sinnvoll in einer TWA abgetrennt werden kann, ist die erfindungsgemäße Vorrichtung mit einer stromaufwärts der ersten TWA angeordneten Einrichtung zur Abtrennung des Hauptteils des Kohlendioxids aus dem Erdgas ausgeführt. Vorzugsweise handelt es sich bei dieser Einrichtung um eine Sauergaswäsche wie etwa eine Aminwäsche. Zweckmäßigerweise ist diese Einrichtung zur Abtrennung von Kohlendioxid so mit dem thermochemischen Konverter verbunden, dass aus dem Erdgas abgetrenntes Kohlendioxid dem thermochemischen Konverter als Einsatzstoff zugeführt werden kann.

Eine Variante der erfindungsgemäßen Vorrichtung sieht eine Bypass-Leitung vor, über die ein nicht zur Erzeugung von Regeneriergas für die beiden TWA benötigter Teil des stickstoff- und kohlendioxidhaltigen Erdgases nach einer evtl. Abtrennung von Quecksilber und/oder Schwefelkomponenten an der ersten TWA, dem kryogenen Gaszerleger und ggf. der Einrichtung zur Abtrennung von Kohlendioxid vorbei, direkt dem thermochemischen Konverter zuführbar ist.

Weiterhin sieht die Erfindung vor, dass der thermochemische Konverter als Autothermalreformer oder Partialoxidationsreaktor oder Dampfreformer oder als Kombination von wenigstens zwei dieser Apparate ausgeführt ist.

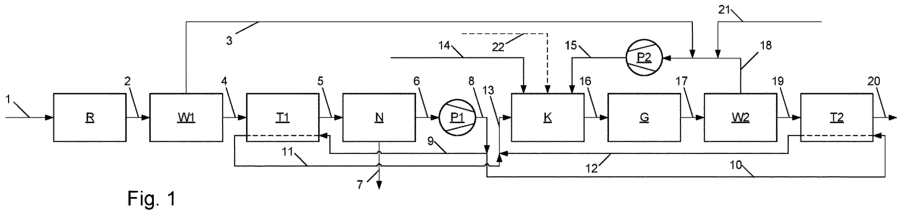

Im Folgenden soll die Erfindung anhand eines in der **Figur 1** schematisch dargestellten Ausführungsbeispiels näher erläutert werden.

Die Figur 1 zeigt eine Variante der Erfindung, bei der ein stickstoffarmes Oxogas aus stickstoff- und kohlendioxidhaltigem Erdgas erzeugt wird.

Über Leitung 1 wird stickstoff- und kohlendioxidhaltiges Erdgas der Reinigungseinrichtung R zugeführt, wo in einem ersten Reinigungsschritt Stoffe wie Quecksilber abgetrennt werden. Das derart behandelte Erdgas 2 wird anschließend zur Entfernung des Hauptteils des enthaltenen Kohlendioxids 3 einer Sauergaswäsche W1 zugeführt, bei der es sich etwa um eine Aminwäsche handelt. Mit reduziertem Kohlendioxidgehalt strömt das Erdgas über Leitung 4 in die erste TWA T1, wo Wasser sowie verbliebenes Kohlendioxid abgetrennt und ein stickstoffhaltiges, wasser- und kohlendioxidfreies Erdgas 5 erzeugt wird, das im kryogenen Gaszerleger N in ein stickstoffarmes, wasser- und kohlendioxidfreies Erdgas 6 und eine strickstoffreiche Brenngasfraktion 7 zerlegt wird. Nach einer Druckerhöhung im Verdichter P1 wird das stickstoffarme, wasser- und kohlendioxidfreie Erdgas 8 in einen ersten 9 und einen zweiten Teilstrom 10 aufgespalten, von denen der erste 9 als Regeneriergas bei der Adsorberregenerierung in der ersten TWA T1 eingesetzt wird, während der zweite Teil 10 zu demselben Zweck einer weiter stromabwärts zur Gastrocknung angeordneten zweiten TWA T2 zugeführt wird. Die beiden mit desorbiertem Wasser und Kohlendioxid beladenen Regeneriergasströme 11 und 12 werden zurückgeführt und über Leitung 13 dem thermochemischen Konverter K als Erdgas-Einsatz aufgegeben. Im thermochemischen Konverter K wird der Erdgas-Einsatz 13 zusammen mit Dampf 14, sowie Kohlendioxid 15 und ggf. Sauerstoff 22 zu einem Wasserstoff, Kohlenmonoxid, Wasser und Kohlendioxid umfassenden Syntheserohgas 16 umgesetzt, das nach Abkühlung in der Kühleinrichtung G über Leitung 17 zur Abtrennung von Kohlendioxid 18 in eine weitere Sauergaswäsche W2 geführt wird, die ebenfalls als Aminwäsche ausgeführt sein kann. In der zweiten TWA T2 wird das im Kohldioxidgehalt reduzierte Syntheserohgas 19 von Wasser und Kohlendioxidresten gereinigt, wobei ein stickstofffreies, weitgehend aus Wasserstoff und Kohlenmonoxid bestehendes Synthesegas 20 als Produkt erhalten wird. Das aus dem abgekühlten Syntheserohgas 17 abgetrennte Kohlendioxid 18 wird nach Zumischung von aus dem Erdgas 2 abgetrenntem Kohlendioxid 3 sowie importiertem Kohlendioxid 21 zur Erhöhung der Kohlenmonoxid-Produktion über den zweiten Verdichter P2 und die Leitung 15 als Einsatz in den thermochemischen Konverter K zurückgeführt.

## Patentansprüche

1. Verfahren zur Erzeugung eines stickstoffarmen Synthesegases (20) aus einem stickstoff- und kohlendioxidhaltigen Erdgas (1), von dem dabei Wasser und Kohlendioxid in einer ersten Temperaturwechseladsorptionsanlage (T1) und anschließend Stickstoff (7) in einem kryogenen Gaszerleger (N) abgetrennt werden, so dass ein stickstoffarmes, wasser- und kohlendioxidfreies Erdgas (6) entsteht, das nachfolgend einer thermochemischen Konvertierung (K) zugeführt wird, um ein Wasserstoff, Kohlenmonoxid, Wasser und Kohlendioxid umfassendes Syntheserohgas (16) zu gewinnen, aus dem zumindest durch die Abtrennung von Wasser und Kohlendioxid in einer zweiten Temperaturwechseladsorptionsanlage (T1) das stickstoffarme Synthesegas (20) erhalten wird, **dadurch gekennzeichnet, dass** wenigstens ein Teil (8) des stickstoffarmen, wasser- und kohlendioxidfreien Erdgases (6) vor seiner thermochemischen Konvertierung (K) bei der Regenerierung der ersten (T1) und/oder der zweiten Temperaturwechseladsorptionsanlage (T2) als Regeneriergas (9, 10) eingesetzt wird.

2. Verfahren nach Anspruch 1, **dadurch gekennzeichnet, dass** der als Regeneriergas (11, 12) eingesetzte Teil des stickstoffarmen, wasser- und kohlendioxidfreien Erdgases (8) zusammen mit den bei der Adsorberregenerierung desorbierten Stoffen der thermochemischen Konvertierung (K) zugeführt wird.

3. Verfahren nach einem der Ansprüche 1 oder 2, **dadurch gekennzeichnet, dass** der als Regeneriergas bestimmte Teil (8) des stickstoffarmen, wasser- und kohlendioxidfreien Erdgases (6) in einen ersten (9) und einen zweiten Teil (10) getrennt wird, von denen der erste (9) ausschließlich in der ersten (T1) und der zweite (10) ausschließlich in der zweiten Temperaturwechseladsorptionsanlage (T2) als Regeneriergas verwendet wird.

4. Verfahren nach einem der Ansprüche 1 bis 3, **dadurch gekennzeichnet, dass** im stickstoff- und kohlendioxidhaltigen Erdgas (1) vorhandenes Kohlendioxid (3) stromaufwärts der ersten Temperaturwechseladsorptionsanlage (T1) abgetrennt wird.

5. Verfahren nach einem der Ansprüche 1 bis 4, **dadurch gekennzeichnet, dass** die thermochemische Konvertierung (K) als Autothermalreformierung oder Partielle Oxidation oder Dampfreformierung oder als Kombination von wenigstens zwei dieser Verfahren durchgeführt wird.

6. Vorrichtung zur Erzeugung eines stickstoffarmen Synthesegases (20) aus einem stickstoff- und kohlendioxidhaltigen Erdgas (1), mit einer ersten Temperaturwechseladsorptionsanlage (T1) zur Abtrennung von Wasser und Kohlendioxid aus dem stickstoff- und kohlendioxidhaltigen Erdgas (1) und zur Gewinnung eines stickstoffhaltigen, wasser- und kohlendioxidfreien Erdgases (5), einem kryogenen Gaszerleger (N), mit dem aus dem stickstoffhaltigen, wasser- und kohlendioxidfreien Erdgas (5) durch die Abtrennung von Stickstoff (7) ein stickstoffarmes, wasser- und kohlendioxidfreies Erdgas (6) erhältlich ist, einem thermochemischen Konverter (K) zur Umsetzung des stickstoffarmen, wasser- und kohlendioxidfreien Erdgases (6) zu einem Wasserstoff, Kohlenmonoxid, Wasser und Kohlendioxid umfassenden Syntheserohgas (16), sowie einer zweiten Temperaturwechseladsorptionsanlage (T2), mit der aus dem Syntheserohgas (16) Wasser und Kohlendioxid abgetrennt werden können, um das stickstoffarme Synthesegas (20) zu erhalten, **dadurch gekennzeichnet, dass** der kryogene Gaszerleger (N) über die erste (T1) und die zweite Temperaturwechseladsorptionsanlage (T2) derart mit dem thermochemischen Konverter (K) verbunden ist, dass wenigstens ein Teil (8) des stickstoffarmen, wasser- und kohlendioxidfreien Erdgases (6) vor seiner Umsetzung im thermochemischen Konverter (K) bei der Regenerierung der ersten (T1) und/oder der zweiten Temperaturwechseladsorptionsanlage (T2) als Regeneriergas (9, 10) einsetzbar ist.

7. Vorrichtung nach Anspruch 6, **dadurch gekennzeichnet, dass** sowohl die erste (T1) als auch die zweite Temperaturwechseladsorptionsanlage (T2) mit dem thermochemischen Konverter (K) so verbunden ist, dass der als Regeneriergas eingesetzte Teil (11,12) des stickstoffarmen, wasser- und kohlendioxidfreien Erdgases (8) zusammen mit den bei der Adsorberregenerierung desorbierten Stoffen dem thermochemischen Konverter (K) zugeführt werden kann.

8. Vorrichtung nach einem der Ansprüche 6 oder 7, **dadurch gekennzeichnet, dass** der kryogene Gaszerleger (N) so mit der ersten (T1) und der zweiten Temperaturwechseladsorptionsanlage (T2) verbunden ist, dass ein erster Teil (9) des als Regeneriergas bestimmten stickstoffarmen, wasser- und kohlendioxidfreien Erdgases (8) ausschließlich in der ersten (T1) und ein zweiter Teil (10) ausschließlich in der zweiten Temperaturwechseladsorptionsanlage (T2) als Regeneriergas verwendbar ist.

9. Vorrichtung nach einem der Ansprüche 6 bis 8, **dadurch gekennzeichnet, dass** sie eine stromaufwärts der ersten Temperaturwechseladsorptionsanlage (T1) angeordnete Einrichtung (W1) zur Abtrennung von Kohlendioxid umfasst, mit der im stickstoff- und kohlendioxidhaltigen (1) enthaltenes Kohlendioxid (3) abgetrennt werden kann.

10. Vorrichtung nach einem der Ansprüche 6 bis 9, **dadurch gekennzeichnet, dass** der thermochemische Konverter (K) als Autothermalreformer oder Partialoxidationsreaktor oder Dampfreformer oder als Kombination von wenigstens zwei dieser Apparate ausgeführt ist.

## Claims

1. Process for producing a low-nitrogen synthesis gas (20) from a natural gas (1) containing nitrogen and carbon dioxide, from which water and carbon dioxide are removed in a first temperature swing adsorption plant (T1) and subsequently nitrogen (7) is removed in a cryogenic gas fractionator (N), so that a low-nitrogen, water-free and carbon dioxide-free natural gas (6) is formed which is then supplied to a thermochemical conversion (K) in order to recover a raw synthesis gas (16) comprising hydrogen, carbon monoxide, water and carbon dioxide, from which raw synthesis gas the low-nitrogen synthesis gas (20) is obtained at least by the removal of water and carbon dioxide in a second temperature swing adsorption plant (T1), **characterized in that** at least a portion (8) of the low-nitrogen, water-free and carbon dioxide-free natural gas (6), prior to its thermochemical conversion (K), is used as regeneration gas (9, 10) in the regeneration of the first (T1) and/or second temperature swing adsorption plant (T2).

2. Process according to claim 1, **characterized in that** the portion of the low-nitrogen, water-free and carbon dioxide-free natural gas (8) used as regeneration gas (11, 12) is supplied to the thermochemical conversion (K) together with the substances desorbed during the adsorber regeneration.

3. Process according to any of claims 1 or 2, **characterized in that** the portion (8) of the low-nitrogen, water-free and carbon dioxide-free natural gas (6) which is intended as regeneration gas is separated into a first portion (9) and a second portion (10), of which the first portion (9) is used as regeneration gas exclusively in the first temperature swing adsorption plant (T1) and the second portion (10) is used as regeneration gas exclusively in the second temperature swing adsorption plant (T2).

4. Process according to any of claims 1 to 3, **characterized in that** carbon dioxide (3) present in the natural gas (1) containing nitrogen and carbon dioxide is removed upstream of the first temperature swing adsorption plant (T1).

5. Process according to any of claims 1 to 4, **characterized in that** the thermochemical conversion (K) is carried out as autothermal reforming or partial oxidation or steam reforming or as a combination of at least two of these processes.

6. Apparatus for producing a low-nitrogen synthesis gas (20) from a natural gas (1) containing nitrogen and carbon dioxide, having a first temperature swing adsorption plant (T1) for removing water and carbon dioxide from the natural gas (1) containing nitrogen and carbon dioxide and for recovering a nitrogen-containing, water-free and carbon dioxide-free natural gas (5), having a cryogenic gas fractionator (N), by means of which a low-nitrogen, water-free and carbon dioxide-free natural gas (6) can be obtained from the nitrogen-containing, water-free and carbon dioxide-free natural gas (5) by the removal of nitrogen (7), having a thermochemical converter (K) for converting the low-nitrogen, water-free and carbon dioxide-free natural gas (6) to form a raw synthesis gas (16) that comprises hydrogen, carbon monoxide, water and carbon dioxide, and having a second temperature swing adsorption plant (T2), by means of which water and carbon dioxide can be removed from the raw synthesis gas (16) to obtain the low-nitrogen synthesis gas (20), **characterized in that** the cryogenic gas fractionator (N) is connected to the thermochemical converter (K) via the first (T1) and the second temperature swing adsorption plant (T2) such that at least a portion (8) of the low-nitrogen, water-free and carbon dioxide-free natural gas (6), prior to its conversion in the thermochemical converter (K), can be used as regeneration gas (9, 10) in the regeneration of the first (T1) and/or second temperature swing adsorption plant (T2).

7. Apparatus according to claim 6, **characterized in that** both the first (T1) and the second temperature swing adsorption plant (T2) are connected to the thermochemical converter (K) such that the portion (11, 12) of the low-nitrogen, water-free and carbon dioxide-free natural gas (8) used as regeneration gas can be supplied to the thermochemical converter (K) together with the substances desorbed during the adsorber regeneration.

8. Apparatus according to any of claims 6 or 7, **characterized in that** the cryogenic gas fractionator (N) is connected to the first (T1) and the second temperature swing adsorption plant (T2) such that a first portion (9) of the low-nitrogen, water-free and carbon dioxide-free natural gas (8) intended as regeneration gas can be used as regeneration gas exclusively in the first temperature swing adsorption plant (T1) and a second portion (10) can be used as regeneration gas exclusively in the second temperature swing adsorption plant (T2).

9. Apparatus according to any of claims 6 to 8, **characterized in that** it comprises a device (W1) arranged upstream of the first temperature swing adsorption plant (T1) for removing carbon dioxide, by means of which carbon dioxide (3) contained in the (1) containing nitrogen and carbon dioxide can be removed.

10. Apparatus according to any of claims 6 to 9, **characterized in that** the thermochemical converter (K) is configured as an autothermal reformer or partial oxidation reactor or steam reformer or as a combination of at least two of these apparatuses.

## Revendications

1. Procédé de production d'un gaz de synthèse (20) pauvre en azote à partir d'un gaz naturel (1) contenant de l'azote et du dioxyde de carbone, gaz naturel duquel l'eau et le dioxyde de carbone sont séparés dans une première installation d'adsorption à température alternée (T1) et ensuite l'azote (7) est séparé dans un séparateur de gaz (N) cryogénique, de manière à obtenir un gaz naturel (6) pauvre en azote et exempt d'eau et de dioxyde de carbone, qui est par la suite soumis à une conversion thermochimique (K) pour obtenir un gaz brut de synthèse (16) comprenant de l'hydrogène, du monoxyde de carbone, de l'eau et du dioxyde de carbone, gaz brut de synthèse à partir duquel le gaz de synthèse (20) pauvre en azote est obtenu au moins par la séparation de l'eau et du dioxyde de carbone dans une seconde installation d'adsorption à température alternée (T1), **caractérisé en ce qu'**au moins une partie (8) du gaz naturel (6) pauvre en azote et exempt d'eau et de dioxyde de carbone est utilisée comme gaz de régénération (9, 10) avant sa conversion thermochimique (K) lors de la régénération de la première (T1) et/ou de la seconde installation d'adsorption à température alternée (T2).

2. Procédé selon la revendication 1, **caractérisé en ce que** la partie du gaz naturel (8), pauvre en azote et exempt d'eau et de dioxyde de carbone, utilisée comme gaz de régénération (11, 12) est soumise à la conversion thermochimique (K) conjointement avec les substances désorbées lors de la régénération d'un adsorbeur.

3. Procédé selon l'une des revendications 1 ou 2, **caractérisé en ce que** la partie (8) du gaz naturel (6) pauvre en azote et exempt d'eau et de dioxyde de carbone, déterminée comme gaz de régénération, est séparée en une première (9) et une seconde partie (10), la première (9) étant utilisée comme gaz de régénération exclusivement dans la première installation d'adsorption à température alternée (T1) et la seconde (10) étant utilisée comme gaz de régénération exclusivement dans la seconde installation d'adsorption à température alternée (T2).

4. Procédé selon l'une des revendications 1 à 3, **caractérisé en ce que** le dioxyde de carbone (3) présent dans le gaz naturel (1) contenant de l'azote et du dioxyde de carbone est séparé en amont de la première installation d'adsorption à température alternée (T1).

5. Procédé selon l'une des revendications 1 à 4, **caractérisé en ce que** la conversion thermochimique (K) est réalisée sous la forme d'un reformage autothermique ou d'une oxydation partielle ou d'un reformage à la vapeur ou d'une combinaison d'au moins deux de ces procédés.

6. Dispositif de production d'un gaz de synthèse (20) pauvre en azote à partir d'un gaz naturel (1) contenant de l'azote et du dioxyde de carbone, comportant une première installation d'adsorption à température alternée (T1) permettant de séparer l'eau et le dioxyde de carbone du gaz naturel (1) contenant de l'azote et du dioxyde de carbone et d'obtenir un gaz naturel (5) contenant de l'azote et exempt d'eau et de dioxyde de carbone, un séparateur de gaz (N) cryogénique qui permet d'obtenir, à partir du gaz naturel (5) contenant de l'azote et exempt d'eau et de dioxyde de carbone, un gaz naturel (6) pauvre en azote et exempt d'eau et de dioxyde de carbone par la séparation de l'azote (7), un convertisseur thermochimique (K) permettant de transformer le gaz naturel (6) pauvre en azote et exempt d'eau et de dioxyde de carbone en un gaz brut de synthèse (16) comprenant de l'hydrogène, du monoxyde de carbone, de l'eau et du dioxyde de carbone, ainsi qu'une seconde installation d'adsorption à température alternée (T2), au moyen de laquelle l'eau et le dioxyde de carbone peuvent être séparés du gaz brut de synthèse (16) pour obtenir le gaz de synthèse (20) pauvre en azote, **caractérisé en ce que** le séparateur de gaz (N) cryogénique est relié au convertisseur thermochimique (K) par l'intermédiaire de la première (T1) et de la seconde installation d'adsorption à température alternée (T2) de telle sorte qu'au moins une partie (8) du gaz naturel (6) pauvre en azote et exempt d'eau et de dioxyde de carbone peut être utilisée comme gaz de régénération (9, 10) avant sa transformation dans le convertisseur thermochimique (K) lors de la régénération de la première (T1) et/ou de la seconde installation d'adsorption à température alternée (T2).

7. Dispositif selon la revendication 6, **caractérisé en ce que,** aussi bien la première (T1) que la seconde installation d'adsorption à température alternée (T2) sont reliées au convertisseur thermochimique (K) de telle sorte que la partie (11, 12) du gaz naturel (8) pauvre en azote et exempt d'eau et de dioxyde de carbone, utilisée comme gaz de régénération, peut être amenée au convertisseur thermochimique (K) conjointement avec les substances désorbées lors de la régénération de l'adsorbeur.

8. Dispositif selon l'une des revendications 6 ou 7, **caractérisé en ce que** le séparateur de gaz (N) cryogénique est relié à la première (T1) et à la seconde installation d'adsorption à température alternée (T2) de telle sorte qu'une première partie (9) du gaz naturel (8) pauvre en azote et exempt d'eau et de dioxyde de carbone, déterminé comme gaz de régénération, peut être utilisée comme gaz de régénération exclusivement dans la première installation d'adsorption à température alternée (T1) et une seconde partie (10) peut être utilisée comme gaz de régénération exclusivement dans la seconde installation d'adsorption à température alternée (T2).

9. Dispositif selon l'une des revendications 6 à 8, **caractérisé en ce qu'**il comprend un équipement (W1) permettant de séparer le dioxyde de carbone, lequel équipement est disposé en amont de la première installation d'adsorption à température alternée (T1) et permet de séparer le dioxyde de carbone (3) contenu dans le (1) contenant de l'azote et du dioxyde de carbone.

10. Dispositif selon l'une des revendications 6 à 9, **caractérisé en ce que** le convertisseur thermochimique (K) est conçu sous la forme d'un reformeur autothermique ou d'un réacteur à oxydation partielle ou d'un reformeur à vapeur ou d'une combinaison d'au moins deux de ces appareils.
